# EUROPEAN PATENT SPECIFICATION

(11) **EP 1 617 092 B1**
(45) Date of publication and mention of the grant of the patent: **10.04.2013**
(21) Application number: 05015342.8
(22) Date of filing: 14.07.2005
(51) Int. Cl.: F16C 33/58, F16C 29/06

(54) **Linear guide bearing apparatus**
Linearführungslager
Palier à guide linéaire

(30) Priority: 14.07.2004 JP 2004207171
(43) Date of publication of application: 18.01.2006
(73) Proprietor: NSK LTD., Shinagawa-ku, Tokyo (JP); NSK Precision Co., Ltd., Tokyo (JP)
(72) Inventor: Yamazaki, Yasuyuki, Hanyu-shi Saitama (JP); Nakagawa, Takumi, Maebashi-shi Gunma (JP)
(74) Representative: Grünecker, Kinkeldey, Stockmair & Schwanhäusser

(56) References cited:
- EP-A1- 0 508 317
- JP-A- 1 012 129
- JP-A- 9 177 768
- US-A- 4 659 238

## Description

### BACKGROUND OF THE INVENTION

The present invention relates to a linear guide bearing apparatus for use in, for example, industrial machines.

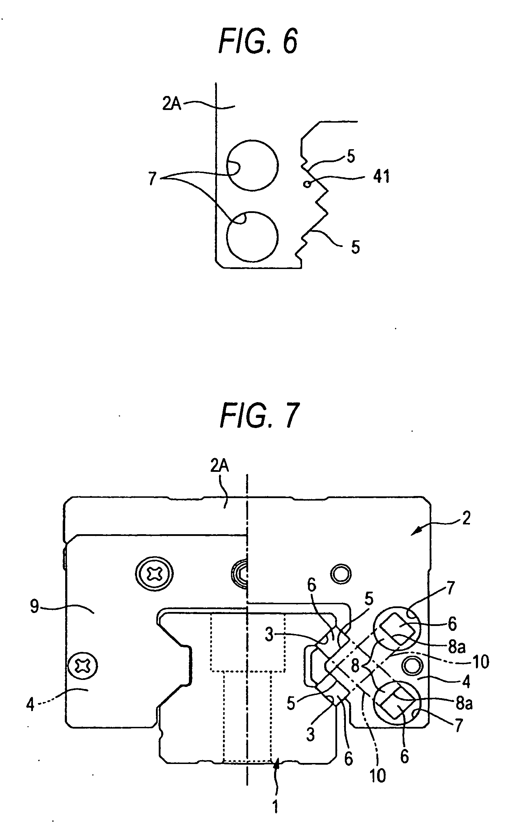

For example, an apparatus shown in FIG. 7 is known as a related linear guide bearing apparatus of such a kind (see, for instance, Patent Document 1).

This linear guide bearing apparatus has a guide rail 1 extending in an axial direction, and a slider 2 bridged across the guide rail 1 to be able to be displaced with respect thereto in the axial direction. Two rows of rolling-element rolling grooves 3 extending in the axial direction are formed in each of both widthwise side surfaces of the guide rail 1, so that a total of four rolling-element rolling grooves 3 are formed.

Rolling-element rolling grooves 5 respectively opposed to the rolling-element rolling grooves 3 are formed in the inner side surfaces of both sleeve portions 4 of the slider body 2A of the slider 2. These rolling-element rolling grooves 3 and 5 constitute a load raceway.

Many cylindrical rollers 6 serving as rolling elements are rollably loaded into the load raceway. Rolling of the rollers 6 enables the slider 2 to be displaced on the guide rail 1 in the axial direction with respect thereto.

As the slider 2 is displaced, the cylindrical rollers 6 intervening between the guide rail 1 and the slider 2 roll and move to an axial end of the slider 2. However, it is necessary for consecutively moving the slider 2 in the axial direction to endlessly circulate these cylindrical rollers 6.

Thus, cylindrical holes 7 axially penetrating through the sleeve portions 4 of the slider body 2A are formed. Circulating sleeves 8, the inside of each of which is used as a path (a rolling element path) 8a for the cylindrical roller 6, are fitted into these holes 7. Also, end caps 9 are respectively fixed to both axial ends of the slider body 2A by screws. A direction change path 10, which is curved like an arc and communicates between the load raceway and the rolling element path 8a is formed in each of the end caps 9. Thus, an endless raceway for the cylindrical rollers 5 is formed.

Incidentally, the direction change path 10 communicating between the upper rolling-element path 8a and each of both the lower rolling-element rolling grooves 3 and 5 is disposed to cross the direction change path 10, which communicates between the lower rolling-element path 8a and each of both the upper rolling-element rolling grooves 3 and 5, in a grade separation manner.

Prior art US 4 659 238 A discloses a linear roller bearing unit with an axially extending rail having groove portions on both sides of the rail. The linear roller bearing unit further comprises a slider which encompasses the rail and two rows of rollers provided on a horizontal plane of the rail and two rows of rollers provided in the grooves of the rail, so that the slider is movable on the rail. The slider further comprises four bores into which sleeves are fitted and which are positioned with respect to the rows of rollers. The sleeves provide projecting portions extending the axial end of the slider. At an axial end of the slider, an end cap is provided which comprises four direction change paths which are positioned to connect each bore with a respective row of rollers.
[Patent Document 1] JP-A-2002-54633.

In the related linear guide bearing apparatus, the rolling element path 8a of each of the circulating sleeves 8 fitted into the holes 7 of the slider body 2A is a path for the cylindrical roller 8 and is cross-sectionally rectangular. Thus, it is necessary for forming the endless circulating raceway that when the circulating sleeves 8 are inserted into the holes 7, an operation of carefully inserting or turning the circulating sleeves 8 is performed so that the position of each of the circulating sleeves 8 is adjusted to an appropriate value with respect to the associated hole 7. The related linear guide bearing apparatus has a drawback in that this operation is troublesome.

### SUMMARY OF THE INVENTION

The invention is accomplished to solve the drawback. An object of the invention is to provide a linear guide bearing apparatus enabled to easily achieve an operation of adjusting the phase of the circulating sleeves and also enabled to smoothly perform assembly thereof.

The aforesaid object is achieved by a linear guide bearing apparatus having the features of independent claim 1. Preferred embodiments are specified in the dependent claims.

The slider includes a slider body, in which a circulating sleeve is fitted into each of holes axially penetrating therethrough and has an inner part used as a rolling element path, and an end cap that has a curved direction change path communicating between the load raceway and the rolling element path and that is fixed at an axial end portion of the slider body. The first aspect linear guide bearing apparatus features that a projecting portion extending along an axial end surface of the slider body is provided at least at one of the circulating sleeves.

According to the second aspect of the invention, there is provided with the linear guide bearing apparatus according to the first aspect, further including a concave portion, into which the projecting portion is fitted, provided in the end cap, wherein a position of each of the circulating sleeves with respect to the slider body is adjusted by fitting the projecting portion into the concave portion.

According to the third aspect of the invention, there is provided with the linear guide bearing apparatus according to the first or second aspect, wherein the projecting portion constitutes a part of the direction change path.

According to a fourth aspect of the invention, there is provided with the linear guide bearing apparatus according to the first aspect, further including a concave portion provided in an axial end portion of the slider body, and a convex portion to be fitted into the concave portion provided on the projecting portion, wherein a position of each of the circulating sleeves with respect to the slider body is adjusted by fitting the convex portion into the concave portion.

According to a fifth aspect of the invention, there is provided with the linear guide bearing apparatus according to one of the first to fourth aspects, wherein the circulating sleeve with the projecting portion includes a first circulating sleeve constituent member and a second circulating sleeve constituent member, into which the circulating sleeve is split along a central axis thereof, and a color for discriminating between the first circulating sleeve constituent member and the second circulating sleeve constituent member is applied to at least one of the first circulating sleeve constituent member and the second circulating sleeve constituent member.

According to the first aspect of the linear guide bearing apparatus of the invention, application of torque, which is used for rotating the circulating sleeve, to the projecting portion is facilitated by operating the projecting portion, which is provided at least at one of the circulating sleeves and extends along the axial end surface of the slider body, after the circulating sleeve is inserted into the hole of the slide body. Consequently, an operation of adjusting the position of the circulating sleeve with respect to the hole of the slider body is facilitated.

Also, even in a case where the circulating sleeve is firmly fixed in the hole of the slider body by intermediate-fitting or interference-fitting so as to increase the stiffness of the circulating sleeve and as to suppress the vibrations and the noises, the torque causing the circulating sleeve to be fitted into the hole to rotate can be applied by utilizing the projecting portion. Consequently, the operation of adjusting the position of the circulating sleeve can easily be performed.

The first aspect of the linear guide bearing apparatus of the invention further features that a concave portion is provided in an axial end portion of the slider body, that a convex portion to be fitted into the concave portion is provided on the projecting portion, and that a position of each of the circulating sleeves with respect to the slider body is adjusted by fitting the convex portion into the concave portion. Thus, when the apparatus is fabricated, the position of the circulating sleeve can easily be adjusted.

Also, because the concave portion serves as a mark indicating the hole, into which the circulating sleeve is inserted, the circulating sleeve can be prevented from being inserted into the erroneous hole.

The second aspect of the linear guide bearing apparatus features that a concave portion, into which the projecting portion is fitted, is provided in the end cap, and that a position of each of the circulating sleeves with respect to the slider body is adjusted by fitting the projecting portion into the concave portion, in addition to the features of the first aspect linear guide bearing apparatus of the invention. Thus, when the apparatus is fabricated, the position of the circulating sleeve can easily be adjusted.

The third aspect linear guide bearing apparatus of the invention features that the projecting portion constitutes a part of the direction change path, in addition to the features of the first or second aspect linear guide bearing apparatus of the invention. Thus, the number of the components can be reduced. Also, the step-like parts in the circulating path, in which the rolling elements are circulated, are reduced. Consequently, the rolling elements can smoothly be passed therethrough.

The fourth aspect linear guide bearing apparatus of the invention features that a color for discriminating between the first circulating sleeve constituent member and the second circulating sleeve constituent member is applied to at least one of the first circulating sleeve constituent member and the second circulating sleeve constituent member, in addition to the feature of one of the first to third aspect linear guide bearing apparatuses. Thus, the first circulating sleeve constituent member and the second circulating sleeve constituent member can be discriminated from each other at a glance and also can be combined with each other.

### BRIEF DESCRIPTION OF THE DRAWINGS

FIG. 1 is an explanatory view illustrating a primary part of a linear guide bearing apparatus according to the preamble of claim 1.
FIG. 2 is an explanatory view illustrating the configuration of a circulating sleeve shown in FIG. 1.
FIG. 3 is a left side view illustrating the circulating sleeve shown in FIG. 1.
FIG.4 is a view partly illustrating an end cap.
FIG. 5 is an explanatory view illustrating a primary part of a linear guide bearing apparatus that is an embodiment of the invention.
FIG. 6 is a view partly illustrating an axial end surface of a slider body.
FIG. 7 is a partly cutaway explanatory view illustrating a related linear guide bearing apparatus.

### DETAILED DESCRIPTION OF THE PREFERRED EMBODIMENTS

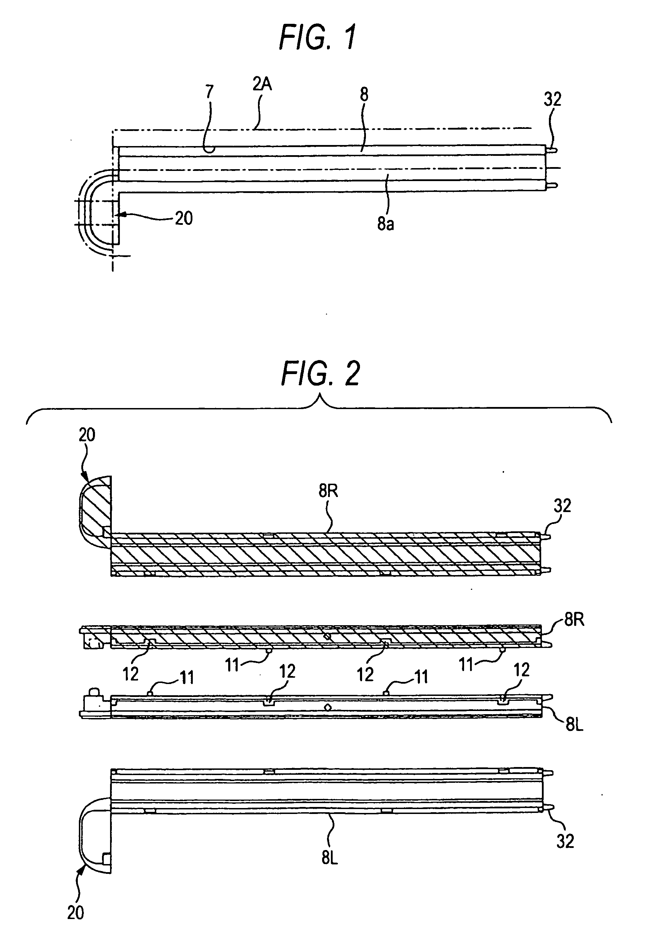

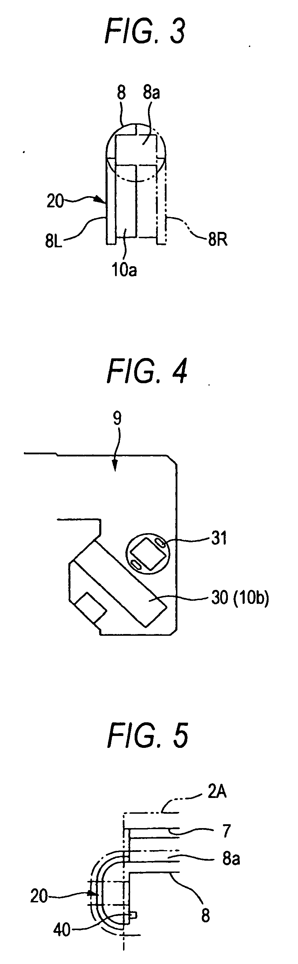

FIG. 1 is an explanatory view illustrating a primary part of a linear guide bearing apparatus according to the preamble of claim 1, used for understanding the present invention. FIG. 2 is an explanatory view illustrating the configuration of a circulating sleeve shown in FIG. 1. FIG. 3 is a left side view illustrating the circulating sleeve shown in FIG. 1. FIG.4 is a view partly illustrating an end cap. FIG. 5 is an explanatory view illustrating a primary part of a linear guide bearing apparatus that is an embodiment of the invention. FIG. 6 is a view partly illustrating an axial end surface of a slider body. Incidentally, in this embodiment, parts, which are the same as or correspond to those described by referring to FIG. 7, are designated by the same reference characters used in FIG. 7. Thus, the description of such parts is omitted herein.

As shown in FIGS. 1 to 3, a linear guide bearing apparatus, according to the preamble of claim 1, has a projectingportion 20 that is provided at an end portion of a circulating sleeve 8 and extends along an axial end surface of a slider body 2A.

The circulating sleeve 8 including the projecting portion 20 is split along a central axis thereof into and comprises twoparts, that is, a first circulating sleeve constituent member 8R and a second circulating sleeve constituent member 8L. A positioning convex portion 11 and a positioning concave portion 12 are respectively formed at a position on the splitting surface of one of the first circulating sleeve constituent member 8R and the second circulating sleeve constituent member 8L, and at a position in that of the other sleeve constituent member so that the position of the convex portion 11 corresponds to the position of the concave portion 12 when the first circulating sleeve constituent member 8R and the second circulating sleeve constituent member 8L are fitted to each other. The circulating sleeve 8 is formed by superposing the splitting surfaces of first circulating sleeve constituent member 8R and the second circulating sleeve constituent member 8L so that the positioning convex portion 11, which is formed at a position on the splitting surface of one of the first circulating sleeve constituent member 8R and the second circulating sleeve constituent member 8L, is fitted into the positioning concave portion 12 formed in that of the other sleeve constituent member. A rolling element path 8a is formed in the circulating sleeve 8. During this state, the circulating sleeve 8 is inserted into a hole 7 of the slider body 2A. A color is applied to the entirety of at least one of the first circulating sleeve constituent member 8R and the second circulating sleeve constituent member 8L. This color enables that the first circulating sleeve constituent member 8R and the second circulating sleeve constituent member 8L can be discriminated from each other at a glance and also can be combined with each other. In this case, when the circulating sleeve constituent members 8R and 8L are formed of resin materials, preferably, a method of applying a color thereto is to apply a color directly to each of the resinmaterials. In a case where the circulating sleeve constituent members 8R and 8L are formedofmetallicmaterials, and where it is difficult to apply a color directly to each of the metallic materials, the color may be applied to the members 8R and 8L by performing secondary processing, such as painting.

Also, application of torque, which is used for rotating the circulating sleeve 8, to the projecting portion 20 is facilitated by operating the projecting portion 20 after the circulating sleeve 8 is inserted into the hole 7 of the slide body 2A. Consequently, the adjustment of the position of the circulating sleeve 8 with respect to the hole 7 of the slider body 2A is facilitated.

Even in a case where the circulating sleeve 8 is firmly fixed in the hole 7 of the slider body 2Aby intermediate-fitting or interference-fitting so as to increase the stiffness of the circulating sleeve 8 and as to suppress the vibrations and the noises, the torque causing the circulating sleeve 8 to be fitted into the hole 7 to rotate can be applied by utilizing the projecting portion 20. Consequently, an operation of adjusting the position of the circulating sleeve can easily be performed.

Also, an inner periphery side raceway 10a of a direction change path 10 is formed in the projecting portion 20 so as to reduce the number of components. In this case, as shown in FIG. 4, a positioning concave portion 30, whose bottom part is formed as an outer periphery side raceway 10b, is provided in the end cap 9. The projecting portion 20 is fitted into this positioning concave portion 30 to thereby adjust the position of the circulating sleeve 8 with respect to the hole 7 of the slider body 2A. Thus, the position of the circulating sleeve 8 can easily be adjusted at fabrication of the apparatus.

Also, the projecting portion 20 is formed integrally with the inner periphery side raceway 10a of the direction change path 10. Thus, step-like parts in the path, in which the cylindrical rollers 6 are circulated, can be reduced. Consequently, the cylindrical rollers 6 can smoothly be passed therethrough.

In this embodiment, a projection 32 is provided at the other end portion of the circulating sleeve 8 so that the projection 32 is fitted into a hole 31 (see FIG. 4) provided in the opposite end cap 9. The circulating sleeve 8 is more firmly fixed by fitting the projection 32 into the hole 31.

Although the foregoing description of the explanatory embodiment has described the case that the position of the circulating sleeve 8 with respect to the hole 7 of the slider body 2A is adjusted by fitting the projecting portion 20 at the side of the circulating sleeve 8 into the positioning concave portion 30 provided in the end cap 9, in the present invention the following configuration is employed. That is, as shown in FIGS. 5 and 6, a convex portion 40 is provided on a side of the projecting portion 20 of the circulating sleeve 8, which faces an axial end surface of the slider body 2A. Also, a concave portion 41, into which the convex portion 40 is fitted, is provided in the axial end surface of the slider body 2A. The position of the circulating sleeve 8 with respect the hole 7 of the slider body 2A is adjusted by fitting the convex portion 40 into the concave portion 41.

Referring to FIG. 6, in this case, the concave portion 41 serves as a mark indicating the hole 7 (the lower one, as viewed in FIG. 6), into which the circulating sleeve 8 is inserted. Thus, the circulating sleeve 8 can be prevented from being inserted into the erroneous hole 7 (the upper one, as viewed in FIG. 6). Incidentally, the other circulating sleeve 8 is inserted from an opposite side into the upper hole shown in FIG. 6. Similarly, the convex portion 40 provided in the projecting portion 20 of the circulating sleeve 8 is fitted into the concave portion 41 of the slider body 2A.

## Claims

1. A linear guide bearing apparatus comprising:
a guide rail (1), which has a rolling element rolling groove (3) extending axially, and
a slider (2), which has a rolling element rolling groove (5) opposed to the rolling element rolling groove (3) of the guide rail (1) and is bridged across the guide rail (1) to be able to be axially displaced with respect thereto by rolling a large number of rollers (6) serving as rolling elements, and which are inserted into a load raceway formed between the rolling element rolling grooves (3, 5), wherein the slider includes:
a slider body (2A) having an axial through hole (7),
a circulating sleeve (8) fitted into the hole (7) and having an inner part used as a rolling element path (8a), and
an end cap (9) that has a curved direction change path (10) communicating between the load raceway and the rolling element path (8a) and that is fixed at an axial end portion of the slider body (2A), and
a projection portion (20) extending along an axial end surface of the slider body (2A) is provided at least at one end of the circulating sleeve (8),
**characterized in that**
the linear guide bearing apparatus further comprises
a concave portion (41) provided in the axial end portion of the slider body (2A), and
a convex portion (40) to be fitted into the concave portion (41) provided on the projecting portion (20), wherein
a position of the circulating sleeve (8) with respect to the slider body (2A) is adjusted by fitting the convex portion (40) into the concave portion (41).

2. The linear guide bearing apparatus according to claim 1, further comprising:
a concave portion (30), into which the projecting portion (20) is fitted, provided in the end cap (9), wherein
a position of the circulating sleeve (8) with respect to the slider body (2A) is adjusted by fitting the projecting portion (20) into the concave portion (30).

3. The linear guide bearing apparatus according to claim 1, wherein
the projecting portion (20) constitutes a part of the direction change path (10).

4. The linear guide bearing apparatus according to claim 1, wherein
the circulating sleeve (8) with the projecting portion (20) includes a first circulating sleeve constituent member (8R) and a second circulating sleeve constituent member (8L), into which the circulating sleeve (8) is split along a central axis thereof, and
a color for discriminating between the first circulating sleeve constituent member (8R) and the second circulating sleeve constituent member (8L) is applied to at least one of the first circulating sleeve constituent member (8R) and the second circulating sleeve constituent member (8L).

## Patentansprüche

1. Linearführungslager mit einer eine sich axial erstreckende Wälzelementlaufrille (3) aufweisenden Führungsschiene (1) und einem Schieber (2), welcher eine der Laufrille (3) der Führungsschiene (1) gegenüberliegende Wälzelement-Laufrille (5) aufweist und die Führungsschiene (1) überbrückt, um axial relativ zu derselben verlagert zu werden, wozu eine große Vielzahl von als Wälzelemente dienenden Rollen (6) abgerollt werden, welche in einen Lagerkäfig eingesetzt sind, der zwischen den Wälzkörper-Laufrillen (3, 5) ausgebildet ist, wobei der Schieber umfasst:
einen Schieberkörper (2A) mit einer Axial-Durchgangsbohrung (7),
eine Umlaufhülse (8), die in die Bohrung (7) eingepasst ist und einen als Wälzelementbahn (8a) dienenden inneren Teil aufweist, und
eine Endkappe (9), die einen gekrümmten Richtungsänderungspfad (10) aufweist, welcher zwischen dem Lagerkäfig und der Wälzlagerbahn (8a) kommuniziert und an einem axialen Endabschnitt des Schieberkörpers (2A) befestigt ist, und
einem Vorsprung (20), welcher sich längs einer axialen Endoberfläche des Schieberkörpers (2A) erstreckt und an wenigstens einem Ende der Umlaufhülse (8) vorgesehen ist,
**dadurch gekennzeichnet, dass**
das Linearführungslager ferner umfasst
einen konkaven Abschnitt (41), welcher am axialen Endabschnitt des Schieberkörpers (2A) vorgesehen ist, und einen konvexen Abschnitt (40), der in den konkaven Abschnitt (41) einführbar ist, welcher an dem Vorsprung (20) vorgesehen ist, wobei eine Stellung der Umlaufhülse (8) relativ zum Schieberkörper (2A) eingestellt wird, durch Einführen des konvexen Abschnittes (40) in den konkaven Abschnitt (41).

2. Linearführungslager nach Anspruch 1, ferner umfassend:
einen konkaven Abschnitt (30), in welchen der an der Endkappe (9) vorgesehene Vorsprung (20) eingepasst ist, wobei eine Stellung der Umlaufhülse (8) relativ zum Schieberkörper (2A) durch Einpassen des Vorsprunges (20) in den konkaven Abschnitt (30) einstellbar ist.

3. Linearführungslager nach Anspruch 1, wobei der Vorsprung (20) einen Teil des Richtungswechselpfades (10) bildet.

4. Linearführungslager nach Anspruch 1, wobei die Umlaufhülse (8) mit dem Vorsprung (20) ein erstes Umlaufhülsen-Bildungsglied (8R) und ein zweites Umlaufhülsen-Bildungsglied (8L) umfasst, in welche die Umlaufhülse (8) längs ihrer Zentralachse geteilt angeordnet ist, und
wobei eine Farbe zum Unterscheiden zwischen dem ersten Umlaufhülsen-Bildungsglied (8R) und dem zweiten Umlaufhülsen-Bildungsglied (8L) aufgetragen ist, auf wenigstens das ersten Umlaufhülsen-Bildungselement (8R) oder das zweite Umlaufhülsen-Bildungsglied (8L).

## Revendications

1. Palier à guide linéaire comprenant :
un rail de guidage (1), comportant une gorge de roulement d'élément de roulement (3) s'étendant axialement, et
un curseur (2) comportant une gorge de roulement d'élément de roulement (5) opposée à la gorge de roulement d'élément de roulement (3) du rail de guidage (1) et qui ponte le rail de guidage (1) pour pouvoir être déplacé axialement par rapport à celui-ci en faisant rouler un grand nombre de rouleaux (6) servant d'élément de roulement et qui sont insérés dans une surface de roulement de charge formée entre les gorges de roulement d'élément de roulement (3, 5), dans lequel le curseur comporte :
un corps de curseur (2A) comportant un trou traversant axial (7),
un manchon de circulation (8) ajusté dans le trou (7) et comportant une partie interne utilisée en tant que chemin d'élément de roulement (8a), et
un couvercle d'extrémité (9) comportant un trajet de changement de direction incurvé (10) communiquant entre la surface de roulement de charge et le chemin d'élément de roulement (8a) et fixé dans une partie d'extrémité axiale du corps de curseur (2A), et
une partie de projection (20) s'étendant le long de la surface d'extrémité axiale du corps de curseur (2A) est prévue au moins à une extrémité du manchon de circulation (8),
**caractérisé en ce que**
le palier à guide linéaire comprend en outre
une partie concave (41) prévue dans la partie d'extrémité axiale du corps de curseur (2A), et
une partie convexe (40) destinée à être ajustée dans la partie concave (41) prévue sur la partie de projection (20), dans lequel
la position du manchon de circulation (8) par rapport au corps de curseur (2A) est réglée en ajustant la partie convexe (40) dans la partie concave (41).

2. Palier à guide linéaire selon la revendication 1, comprenant en outre :
une partie concave (30) dans laquelle est ajustée la partie de projection (20) prévue dans le couvercle d'extrémité (9), dans lequel
la position du manchon de circulation (8) par rapport au corps de curseur (2A) est réglée en ajustant la partie de projection (20) dans la partie concave (30).

3. Palier à guide linéaire selon la revendication 1, dans lequel
la partie de projection (20) constitue une partie du trajet de changement de direction (10).

4. Palier à guide linéaire selon la revendication 1, dans lequel
le manchon de circulation (8) avec la partie de projection (20) comporte un premier élément constitutif de manchon de circulation (8R) et un second élément constitutif de manchon de circulation (8L), dans lequel le manchon de circulation (8) est fendu le long de son axe central, et
une couleur permettant de faire la distinction entre le premier élément constitutif de manchon de circulation (8R) et le second élément constitutif de manchon de circulation (8L), est appliquée au moins sur un élément parmi le premier élément constitutif de manchon de circulation (8R) et le second élément constitutif de manchon de circulation (8L).
